Europäisches Patentamt

European Patent Office

Office européen des brevets

(19)

(11) **EP 0 560 755 B1**

(12) ## EUROPEAN PATENT SPECIFICATION

(45) Date of publication and mention
of the grant of the patent:
**21.08.1996 Bulletin 1996/34**

(21) Application number: **89912483.8**

(22) Date of filing: **15.11.1989**

(51) Int Cl.$^6$: **G01N 21/41**, G01M 11/02

(86) International application number:
**PCT/GB89/01352**

(87) International publication number:
**WO 90/05904 (31.05.1990 Gazette 1990/12)**

(54) **APPARATUS AND METHOD FOR MEASURING REFRACTIVE INDEX**

VORRICHTUNG UND VERFAHREN ZUR BRECHUNGSINDEXMESSUNG

APPAREIL ET PROCEDE DE MESURE D'INDICE DE REFRACTION

(84) Designated Contracting States:
**DE FR GB**

(30) Priority: **15.11.1988 GB 8826643**

(43) Date of publication of application:
**22.09.1993 Bulletin 1993/38**

(73) Proprietor: **YORK TECHNOLOGY LIMITED**
**Chandler's Ford Hampshire S053 4DG (GB)**

(72) Inventor: **SVENDSEN, David, Alan**
**Winchester SO23 8HH (GB)**

(74) Representative: **Fenlon, Christine Lesley et al**
**Haseltine Lake & Co.**
**Hazlitt House**
**28 Southampton Buildings**
**Chancery Lane**
**London WC2A 1AT (GB)**

(56) References cited:
EP-A- 0 096 829      EP-A- 0 174 708
GB-A- 2 071 315      GB-A- 2 116 708
US-A- 4 181 433      US-A- 4 441 811

- **Ekectronics Letters, Vol. 16, March 1980 I. Sasaki et al: "Measurement of refractive-index profiles in optical-fibre preforms by spatial-filtering technique ",**
- **Applied Optics, Vol. 18, July 1979 L.S. Watkins: "Laser beam refraction traversely through a graded-index preform to determine refractive index ratio and gradient profile ",**

## Description

This invention relates to apparatus and a method for measuring by optical means the radial refractive index profile and other properties of a transparent object which is approximately cylindrical, such as an optical fibre or optical fibre preform, the measurement being made by illumination of the object generally transverse to the longitudinal axis of that object. The invention enables in particular the measurement of the radial refractive index profile of certain optical fibre preforms, such as those manufactured by the Vapour Axial Deposition (or VAD) process, which are not amenable to analysis by conventional apparatus and methods.

The refractive index profile of an optical fibre preform is usually required to consist of a smoothly varying average refractive index with radius, with no or few discontinuities in index, and with no variation along the longitudinal axis of the preform. Apparatus and methods have therefore been developed for measuring the refractive index profile, as a means of exercising quality control in the manufacture of preforms.

P.L. Chu, in Electronic Letters, 24th November 1977, Vol. 13, No. 24, pp.736 to 738, describes a method of measuring the refractive index profile of an optical fibre preform by shining a laser beam laterally, but perpendicularly, to the preform axis and recording the exit angle $\phi_x$ of the forward transmitted ray as a function of the distance x from the y-axis of the incident beam. A numerical integration involving those exit angles was then used to yield the refractive index profile. Apparatus for carrying out this method is disclosed by P.L. Chu and T. Whitbread in Electronics Letters, 10th May 1979, Vol. 15, No.10, pp.295 and 296.

GB-A-2071315 discloses a method of sensing radial variations in the refractive index of an approximately cylindrical object, such as an optical fibre preform, comprising illuminating the object over the distance to be measured with a collimated beam of light substantially normal to the axis of the object, focusing the light transmitted by the object in a focal plane parallel to a plane containing the axis of the object, modulating the beam so that a property of the light varies as a function of the distance from the optical axis in the focal plane, measuring a parameter of the focused light beam as a function of the distance of the point of measurement from the axis and deriving the radial variations in refractive index profile from the measurements of the parameter.

Many preforms (such as VAD preforms) are now commonly manufactured from a large number of thin layers of material. Whilst the refractive index of such preforms may vary substantially within each layer, these layers are so thin that the refractive index profile as a whole appears to be smoothly varying. However, it has been discovered that, because these layers are generally thinner than the beam diameter of the illuminating laser beam, diffraction takes place and that the beam exiting from the preform then consists of several distinct parts or orders.

Japanese Patent Application No. 63-95337 discloses a preform analyser comprising a fixed aperture for selecting the zeroth order beam portion, but rejecting the higher order beam portions.

It has now been found that, while such known analysers can successfully measure the refractive index profile of an optical fibre preform of relatively simple form, spurious results can be obtained when they are used with more complex preforms, such as certain VAD preforms. The present invention seeks to overcome these problems and provide a preform analyser which can be used to measure the refractive index profile, and other previously unmeasurable parameters, for a wider range of preforms than was previously possible.

As used herein, the following terms have the following meanings. A "transverse-type analyser" includes any analyser which analyses the optical properties of a preform or other such cylindrical object by illumination of the object generally transversely to its longitudinal axis. An "illuminating beam" includes any type of light, whether visible or not, and may be a broad or narrow beam, and is suitably focussed. At any location along the beam after it has exited the object, the "$\phi_x$ direction" is the direction, generally normal to the direction of the beam at that location, in which the transmitted beam would move if the beam entering the object were moved radially across the object and the object had no axial variation in refractive index. The "$\phi_y$ direction" is the direction orthogonal to the $\phi_x$ direction. $\phi_x$ and $\phi_y$ are the radial and axial angles of refraction respectively. "Portion" in connection with the transmitted beam from the object includes both an entirely non-distinct portion of that beam and also one entirely distinct individual beam (or a part thereof) out of a group of such beams emanating from the one transmitted beam as in, for example, the case of diffraction of that transmitted beam. "Discriminating" (or "selectively discriminating") includes the selection of a single beam from a surrounding signal of zero intensity or low intensity.

The zeroth order beam portion of the diffraction pattern emerging from an optical fibre preform contains the information that will allow computation of the radial refractive index profile. In fact, the zeroth order beam portion will generally have the same $\phi_x$ value as the entire beam in the absence of diffraction. However, it has been discovered that some types of preform give rise to diffraction patterns in which the zeroth order is refracted in the $\phi_y$ direction.

Moreover, it has been found that, although the average refractive index along the axis of a preform may be essentially constant, the particular manufacturing process used may cause layers to be created which do exhibit an axial variation in refractive index. An important example of such a process is the Vapour Axial Deposition manufacturing process. In this process, the optical fibre preform is grown along its longitudinal axis by means of depositing layers axially. The aim of the process is still to produce optical fibre preforms with nearly ideal circular symmetry. For such preforms, it has now been discovered that a particular feature of the diffraction pattern caused by the interaction of the beam with the layer structure is that the zeroth order beam portion is generally not deflected in the axial direction as it passes through the preform, but that the other orders do undergo an axial deflection, and that the amount of the deflection is related to the thickness of layers. In effect, the axial layer structure of such preforms results in a rotation of the diffraction pattern by an amount directly related to the axial gradient of the layer surface. The ability to adjust the filtering means so as to discriminate portions of the transmitted beam which are deflected away from the $\phi_x$ axis thus allows analysis of the higher diffraction orders of such preforms.

Despite the axial layer structure of such VAD preforms, the average refractive index variation is almost entirely radial rather than axial, which means that the average effect is not to deviate the beam in the axial direction. Thus the zeroth order will have a $\phi_y$ of approximately zero.

The present inventor has discovered that, to a first approximation, a VAD preform may be treated as a simple diffraction grating, so that the basic theory which relates the spacing of diffraction orders resulting from such a simple diffraction grating (see, for example, Chapter XII of "Geometrical and Physical Optics", by R. S. Longhurst, Second Edition 1967, published by Longmans) is approximately valid for VAD preforms. Thus the zeroth order is approximately equidistant from the first orders. This discovery is of use particularly when the zeroth order beam portion is not intense enough for measurement, since it enables positional information regarding this beam portion to be obtained from a knowledge of positional information regarding beam portions of other orders.

According to the present invention there is provided a transverse-type analyser, for measuring optical properties of an approximately cylindrical transparent object such as an optical fibre or optical fibre preform, comprising illuminating means for producing an illuminating beam, a detector for sensing the illuminating beam after transmission through said object, means for holding said object between the illuminating means and the detector, and temporal modulation means located between the object and the detector for encoding the beam in the plane of the modulation means with its own positional information for detection by the detector; characterised by electronic means for switching output signals from the detector, so as to allow only selected time portions of those signals to pass, thereby discriminating a selected portion of the beam incident on the detector.

Such electronic means can be regarded as a logic filter and logic filters of this kind are useful in the analysis of many types of preform, even if they are not adjustable. It will be seen that a logic filter provides filtering means analogous to a mechanical aperture (such as may be used to allow only a selected portion of the transmitted beam to reach the detector), but with certain advantages. For example, if the filter is adjustable so as to allow adjustment of the portion of the transmitted beam which is discriminated, it has the advantage over its mechanical counterpart of having no parts which can vibrate and thus disturb the accuracy of measurement, and it has the further advantage of greater speed of adjustability.

In view of the numerous analogies between a logic filter and a mechanical aperture, it will be convenient hereinafter to use the term "aperture" to embrace both forms of filtering means.

The modulating means may suitably be a chopper. The convenience of using the temporal modulation means is that no changes are required to the analyser to convert it to having electronic filtering means, except circuitry or software changes.

The combination of modulating means and electronic filtering of the output of the detector can be thought of as providing an aperture at the plane of the modulating means.

For simplicity, the aperture may only be movable in one direction, such as the $\phi_x$ or $\phi_y$ direction.

It will be appreciated that the same analyser may comprise a combination of both an electronic and a mechanical aperture. A preferred combination is a mechanical fixed or movable aperture oriented to discriminate one or more beam portions having different $\phi_y$ values and an electronic movable aperture oriented to discriminate beam portions having different $\phi_x$ values, since greater speed of movement is often required in the $\phi_x$ direction and since the temporal modulation means advantageously is used in the $\phi_x$ direction.

The aperture may be movable in either one or several directions. If it is movable in more than one direction, it may comprise a plurality of individual fixed but translatable apertures oriented in different directions, or it may be a single translatable and rotatable aperture. It is preferred that the aperture is movable in a plane substantially perpendicular to the beam incident thereon.

It will be appreciated that for many basic types of analyser, specifically those employing a narrow illuminating beam, the beam has to be traversed across the object in order for a complete refractive index profile of the object to be obtained. This may be achieved by moving either the object or the illuminating means, although, since it is often preferred to maintain the detector in a fixed disposition relative to the illuminating means, for simplicity if this is so it is conveniently the object which is movable. In either case, it is preferred for simplicity that the aperture is movable only whilst the beam is fixed relative to the object.

The aperture itself is preferably elongate and more preferably rectangular; clearly the width, rather than the length, of the aperture is then most suited to discriminating portions of the beam.

The aperture is preferably of a size that just accepts the whole beam when there is no diffraction, and only a portion of the beam when diffraction occurs. Preferably, it is large enough to accept substantially all of the beam portion pertaining to one diffraction order, but small enough to reject beam portions pertaining to other diffraction orders.

Preferably, the aperture has an adjustable separation. This enables automatic alignment and configuration of the aperture to accommodate different measurement conditions. In particular, it permits the aperture to accept accurately the beam portion of relevance. Also, it permits the relative intensities of different parts of one beam portion (or diffraction order, say), or even the entire beam profile, to be measured. This can provide useful information regarding the object, as follows.

It is well-known that the characteristics of one layer of a diffraction grating determine the overall relative intensities and shapes of the diffraction orders. This fact is utilised in grating monochromators to ensure that maximum optical intensity appears in a diffraction order higher than zero; the characteristic of the grating which achieves this is termed the "blaze" angle, (see Longhurst, Chapter XII). Thus, the knowledge of the intensities and shapes of the diffraction orders of the beam emanating from a region of the object allows the deduction of the characteristics of a single layer of the refractive index being illuminated. During manufacture, this layer was created by deposition of doped silica particles from a hot gas onto the relatively cool perform surface. The precise nature of the layer is determined by many factors, including temperature, gas composition, and movement of the preform. For example, a layer of large refractive index variation may well indicate that, although initially deposited, some of the dopant material used to modify the refractive index is evaporated by subsequent excessive temperature during the deposition cycle. Thus details of a single layer are a record of the conditions at the time of deposition, and so throughout the preform the layer structure contains a record of the conditions of manufacture of that preform. This record may be used for quality control or as a means of adjusting the deposition conditions to give optimal preform characteristics. The present invention provides the means to determine details regarding this record, and is thus of use to preform manufacturers.

Preferably, the separation of the aperture is adjustable substantially in the direction of movement of the aperture. For instance, if the aperture is elongate, suitably the width rather than the length of the aperture is adjustable, although the aperture could of course be adjustable in several directions.

For preforms where diffraction occurs, the intensities and angles of deflection of the various orders are determined by the size and structure of the layers. Thus, a way of analysing the intensities and angles of deflection of the various orders, in order to obtain important information regarding the structure of the preform, can be provided by selecting a specified portion of the beam exiting the object, for example by adjusting the filtering means so as to accept one portion of the beam whilst rejecting others. Various properties of that beam portion can be measured, such as positional information or intensity. Preferably, therefore, the aperture is adjustable whereby to discriminate a plurality of distinct portions of the beam exiting from the object being analysed (as used in relation to this embodiment of the invention, the term "distinct" connotes portions of the beam having separate intensity peaks, or troughs).

Further, the present discovery that the theory of a simple diffraction grating is applicable to the angular separation of the different diffraction orders, not only for VAD preforms but also other preforms constructed of many thin layers which do not have an axial variation in refractive index, can be utilised to yield positional information regarding the zeroth (or any other) order. This is particularly useful when the orders are all aligned substantially in the $\phi_x$ direction and the zeroth order beam portion is not intense enough for measurement.

Preferably, the analyser further comprises processing means connected to the output of the detector for processing the output information regarding said plurality of distinct portions.

Suitably, the analyser, when used in combination with an object, such as a VAD preform, which diffracts the beam, comprises an aperture which is movable from a position where a beam portion pertaining to one diffraction order can be discriminated to at least one other position where a beam portion having a different diffraction order can be discriminated. It is advantageous that all the diffraction orders can be discriminated in this way, but if this is not the case, it is preferred that the one order is the zeroth order.

Preferably, the analyser further comprises means for separating portions of the beam at the plane of the aperture. Thus, if diffraction occurs, these separating means (preferably in the form of optical components such as lenses) separate the different orders of the diffraction pattern so that they occupy different spatial positions at some point within the optical system, notably approximately at the position of the aperture.

Desirably, focusing means (preferably an asymmetric lens and more preferably a cylindrical lens) are mounted to receive the illuminating beam, the focusing means being located between the object and the aperture and arranged so as to focus the beam asymmetrically in the plane of the aperture.

Means are thereby provided for spreading out the different portions of a diffracted beam more in one direction than another. This enables the aperture to discriminate more clearly between the different portions so that the demands upon the precision of movement of the aperture are minimised and/or the distance of the aperture from the object or any further focusing means (if provided) can be minimised.

As used in relation to this aspect of the invention, the terms "focus" and "focusing" are used widely to connote varying degrees of focusing or separating.

Preferably, the focusing means focuses the beam less sharply in the $\phi_y$ direction than in the $\phi_x$ direction. Indeed, the focusing means may even eliminate all variations in $\phi_x$ at the plane of the aperture. Especially for VAD preforms, it is advantageous to spread the diffracted beam in the $\phi_y$ direction so as to assist discrimination of the different diffraction orders.

If, as is preferred, a cylindrical lens is provided and it has its longitudinal axis oriented substantially in the $\phi_y$ direction, the measuring function of the analyser can be retained in the $\phi_x$ direction whilst those portions of the beam with non-zero $\phi_y$ are spread as widely as possible. To optimise the advantageous aspects using such focusing means it is preferred that the aperture, which may be fixed or movable, is either close to, or actually in the plane of, the detectors. Instead of one cylindrical lens being provided, a combination of lens may be utilised. One particularly advantageous combination is a spherical lens train between the object and the aperture, and a cylindrical lens train between the aperture and the detector. Separating the function of the one cylindrical lens in this way allows greater design flexibility and permits the use of a cylindrical lens of lower optical quality.

Preferably, the analyser further comprises a second focusing means located between the illuminating means and the object and arranged so as to focus the beam asymmetrically at the object. Preferably also, the second focusing means cooperates with the focusing means to focus (and spread) the beam in the same direction. More preferably, the second focusing means focuses the beam less sharply in the direction of the longitudinal axis of the object than in the direction transverse to that axis. This is especially advantageous for generating well separated and narrow diffraction orders in the $\phi_y$ direction when the object contains an axially varying layer structure.

The detector may be of many forms, as described herein, but is preferably capable of measuring the intensity of the beam or beam portion incident thereon. This is advantageous since it has now been found that measurement of the relative intensities of different portions of the beam may be useful in the analysis of the characteristics of the object. If the detector is capable only of measuring intensity, it preferably has a sensitive area sufficiently large to detect all the relevant portions of the beam, in which case it is preferred that the aperture is movable relative to the detector. The analyser then preferably further comprises modulating means to encode the different portions of the beam according to their angular deviations (for example, $\phi_x$). If the detector has a smaller sensitive area, it is preferably movable with the aperture, whereby all light accepted by the aperture is incident on the sensitive area.

Preferably the analyser further comprises interpolation and extrapolation means for calculating positional information concerning the beam portion pertaining to one diffraction order from positional information concerning the beam portions pertaining to other diffraction orders.

This is advantageous since, according to one of the present discoveries, for certain preforms the intensity of the zeroth order beam portion or, in fact, any order beam portion may be small or practically zero, in which case obviously its position is unmeasurable. However, it has now been discovered that in general the $\phi_y$ versus $\phi_x$ plot of the various diffraction orders is practically linear for small diffraction angles, so that positional information regarding the diffraction orders can be deduced from linear interpolation and extrapolation from the positions of two (or more) other orders.

Specifically, if information regarding the zeroth order beam is required, since this beam lies in general on the $\phi_x$ axis, the above interpolation and extrapolation means may deduce the precise location of the zeroth order.

Preferably, the analyser further comprises measuring means coupled to the aperture for measuring the position of the aperture. The analyser of the present invention can thus measure the separation of the orders in a specified plane (for example, the plane in which discrimination of the illuminating beam may be thought to take place). It has now been discovered that this separation can be used to derive useful information regarding the object. More particularly, it has been discovered that the layer thickness determines the angular separation of the orders, the number of layers with respect to the entrance beam diameter determines the angular width, and the precise intensities depend upon the detailed refractive index variation within each layer. Thus, by measuring the separation of the diffraction orders emanating from a preform as a function of perform radius, information concerning the layer thickness variation within the preform can be obtained. This information, when combined with knowledge of the manufacturing process, permits the computation of the contour of the deposition surface. This is of importance in manufacturing process control, for example as discussed by K. Imoto et al. in the Journal of Lightwave Technology, September 1988, Vol. 6, No. 9 pp. 1376 to 1385. The deposition layer surface contour (which is related to the term "bottom shape" in this document) is a new parameter which has never before been utilised for a preform after it has been consolidated to the glass form.

If the line joining the various orders in the plane of the aperture is a straight line, the aperture may be moved in any direction relative thereto except perpendicularly to the line, although preferably the aperture is either moved in a direction substantially parallel to that line, or, for simplicity, in the $\phi_y$ or $\phi_x$ directions.

Suitably, the illuminating beam is narrow compared to the diameter of the object, and the beam is moved transversely relative to the object before the aperture is moved. Movement of the aperture may be repeated for a plurality of diffraction orders, or alternatively one particular order can be tracked as the beam is moved.

Preferably, where information concerning a selected diffraction order at a plurality of radial locations on the object is required, the object having an axial variation in refractive index, the aperture is elongate and has its longitudinal axis aligned substantially in the $\phi_x$ direction, and a plurality of beam portions corresponding to the selected diffraction order are detected, by moving said beam transversely relative to the object whilst the aperture is kept substantially fixed.

Keeping the aperture substantially fixed affords a considerable reduction in the time taken to carry out a series of measurements, and is made possible by virtue of the inventor's discovery that, for objects having an axial variation in refractive index, a specified order always has only one $\phi_y$ value, regardless of the radial location at which the illuminating beam enters the object.

The discoveries and theories underlying the invention, as well as specific embodiments thereof, are now described, by way of example, with reference to the accompanying drawings, in which:

Figure 1 illustrates the definition of $\phi_x$ and $\phi_y$ and shows a typical simple $\phi_y$ versus $\phi_x$ plot;

Figures 2 are typical $\phi_y$ versus $\phi_x$ and intensity plots for various diffracted beams for preforms having no axial variation in refractive index;

Figure 3 shows the internal structure and typical diffraction pattern of a VAD preform;

Figure 4 is a side elevational cross-sectional view of a preform analyser which is not the subject of the present invention, but is useful for understanding it;

Figure 5 is a plan view of the preform analyser of Figure 4;

Figure 6 is a plan view of an aperture used in the analyser of Figure 4, together with a typical diffraction pattern at the aperture plane;

Figures 7 show, for an embodiment of the present invention, the outputs from an optical interrupt detector and a solid state detector;

Figures 8 show typical intensity plots for a diffracted beam; and

Figures 9 are block diagrams showing the logic circuitry used in an embodiment of the present invention.

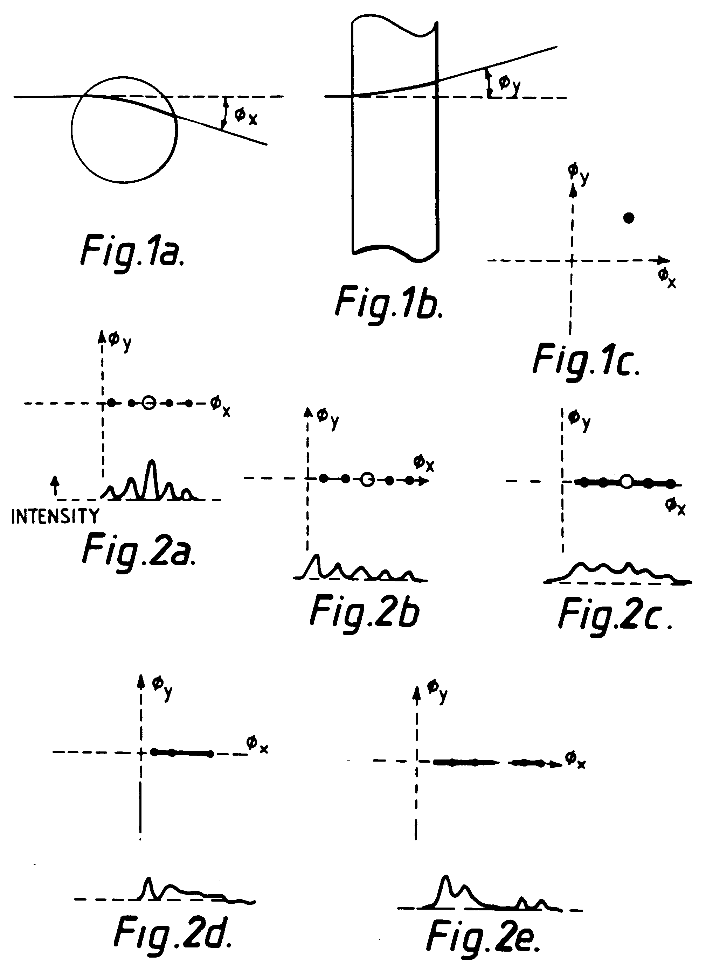

Figure 1a illustrates $\phi_x$, the angle of refraction of the beam in the plane normal to the longitudinal axis of the preform. Figure 1b illustrates $\phi_y$, the angle of refraction in the plane which includes the entrance beam and the longitudinal axis of the preform. Figure 1c is a typical plot of $\phi_y$ versus $\phi_x$, for a simple preform.

In the ideal situation of cylindrical symmetry and perfectly smooth radial variation in refractive index, for any particular point of entry of the entrance beam $\phi_x$ will be single-valued and $\phi_y$ will be zero. Where the radial refractive index does not vary smoothly, that is, where the preform consists of layers much thinner than the beam diameter, it has been found, as described above, that the beam undergoes diffraction and divides in a number of possible different ways into a number of diffraction orders. Different examples of such diffraction order which have been observed are shown in Figures 2a to 2e, in which the zeroth order is shown as an open circle in each case. Of particular interest are Figure 2d, which demonstrates a blurring between the zeroth and first orders, and Figure 2e, in which the zeroth order is of zero intensity.

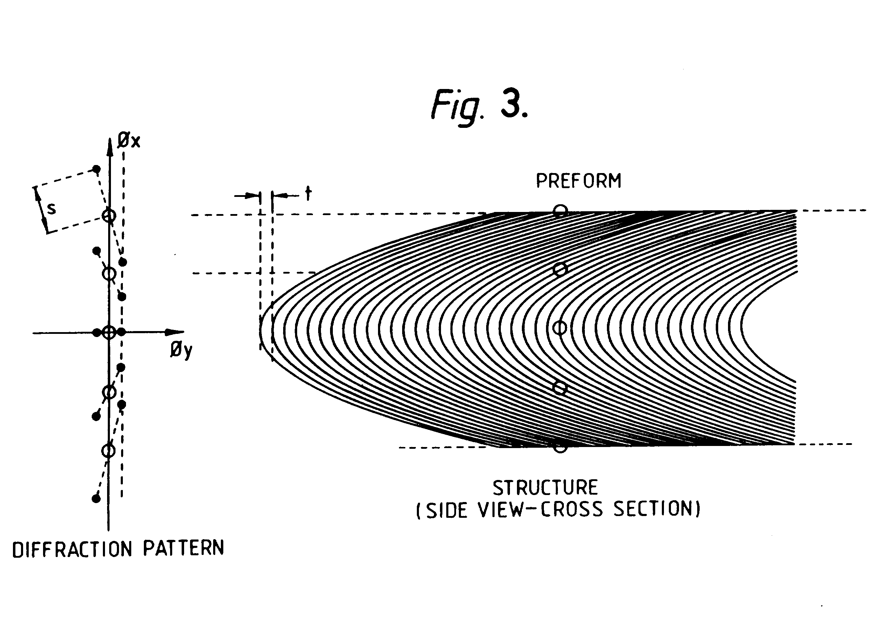

Figure 3 illustrates the rotation in the diffraction pattern which is observed with certain types of preform, such as VAD preforms which have an axial variation in refractive index. As discussed above, the degree of rotation of the diffraction pattern is directly related to the axial gradient of the layer surface. In this figure, t represents the layer thickness and s represents the separation of the zeroth and first order. It has been found that s is defined by the surface gradient of the relevant layer at the relevant position, and the separation of an order in the direction $\phi_y$ from the zeroth order is directly related to t.

A particular feature of the VAD manufacturing process is that the preform is grown axially at a constant rate, and the surface on which glass soot is deposited to form the preform must retain its same shape. Otherwise, the preform would grow at different rates in different radial positions, thus making the deposition process too complex to be successful. Therefore the separation of the layers in the direction of the longitudinal axis of the preform is substantially uniform throughout the preform. It has now been discovered that the separation of the diffraction order in the $\phi_y$ direction is independent of the radial position of the illuminating beam, so that each order lies on a locus of constant $\phi_y$, as shown in Figure 3.

The theory required to determine the position of a selected diffraction order from a knowledge of the positions of other diffraction orders is now described. R.S. Longhurst, in "Geometrical and Physical Optics", Second Edition 1967, published by Longmans, teaches that for a diffraction grating:

$$d * SIN(\Delta\phi) = p\ \lambda/n$$

where d is layer thickness,

$\Delta\phi$ is the angle of deviation from the entrance beam,
p is the diffraction order and has integral value,
$\lambda$ is the wavelength of the light, and
n is the refractive index of the medium.

The value of $\phi$ for any order may be predicted from the values of any other two diffraction orders as follows. If p is the required order and 1 and m are the known orders then:

$$d * SIN(\phi_p - \phi) = p\ \lambda/n$$

$$d * SIN(\phi_l - \phi) = l\ \lambda/n$$

$$d * SIN (\phi_m - \phi) = m \, \lambda/n$$

where $\phi$ is the angle of the beam impinging upon the grating, and thus represents the average value of the grating. It is also the angle of the zeroth order. $\phi_p$, $\phi_l$ and $\phi_m$ are the actual angles of deviation for the orders p, l and m respectively.

Thus, $m * SIN (\phi_l - \phi) = l * SIN (\phi_m-\phi)$, from which $\phi$ may be derived.

This is sufficient when p=0, that is, for the zeroth order. In particular, for small deviations:

$$\phi = (l * \phi_m - m*\phi_l) / (l - m)$$

However, for p not equal to zero (that is, for non-zeroth orders):

$$\phi_p = l + ASN ((p/m)*SIN(\phi_M-\phi))$$

Equivalent expressions exist for $\phi_x$ and $\phi_y$, which are the projections of the deviated beam into the x-y plane. For example:

$$xd * SIN(\phi_{xp} - \phi_x) = p \, \lambda/n \qquad (v)$$

where xd is the projection of the layer thickness in the $\phi_x$ direction, and:

$$yd * SIN(\phi_{yp} - \phi_y) = p \, \lambda/n \qquad (vi)$$

where yd is the projection of the layer thickness in the $\phi_y$ direction.

Thus, in an equivalent manner, the $\phi_x$ value of the zeroth order may be deduced from the measurement of the $\phi_x$ values for any other two orders.

Although only two orders are necessary to compute the above relationships to be able to estimate the position of any other order, it may well be appropriate to make an estimate from each independent pair of orders and then choose the most likely value using a procedure such as a least squares estimate so that an improved result occurs.

The ratio (yd/xd) is a constant since it is determined by the physical position and thickness of the layers in the preform. This confirms equations (v) and (vi) where the ratio yd/xd is independent of the diffraction order chosen. Thus the pairs $\phi_{xp}$ and $\phi_{yp}$ lie on the locus in the $\phi_x/\phi_y$ plane which is just the locus of all light which lies in the diffraction plane normal to the layer surface.

In certain cases, the nature of the layer structure within the preform is such that the light beam is spread sufficiently diffusely for separate diffraction orders not to be unambiguously distinguishable. On the assumption that the beam is diffused normal to the layer surface then the locus of the $\phi_x$ and $\phi_y$ pairs also lies on the same locus as that of the explicit diffraction orders. Therefore, the value of $\phi_x$ for the zeroth order (when $\phi_y$ is zero) may be obtained from the angle of the locus in the $\phi_x$ and $\phi_y$ plane and its intersection with the $\phi_x$ axis simply by extrapolating the locus from measured $\phi_x$, $\phi_y$ pairs. These are easily obtained by positioning the moving aperture at a number of $\phi_y$ positions, without specifically searching for identifiable diffraction orders and measuring the associated $\phi_x$ value. When the angles of diffraction are small, the locus is a straight line which makes computation particularly simple.

The deposition layer surface contour is the shape of the intersection of layer of deposition in the preform with the plane which contains the longitudinal axis of the preform. This shape is precisely the scaled shape of the surface of the preform during the deposition process during manufacture. The scaling arises from the fact that the preform is manufactured as layers of porous doped-silica soot, and is heated and consolidated as a transparent glass preform once deposition is finished. The process of consolidation eliminates the trapped gas and in doing so the preform undergoes diameter reduction which therefore scales the layer surface shape.

The plane of the deviation of the diffraction orders at any radial position within the preform is perpendicular to the gradient of the layers at this point. This follows from using the diffraction model assumption that at the point of measurement the preform behaves like a simple diffraction grating.

The layer gradient dy/dx of the layers in the 0 preform is given by:

$$dy/dx = yd / xd,$$

which is evaluated by equating Equations (v) and (vi) above to give:

$$yd / xd = SIN (\phi_{xp} - \phi_x) / SIN (\phi_{yp} - \phi_y) \qquad (vii)$$

For small angle of diffraction order deviation:

$$yd / xd = (\phi_{xp} - \phi_x) / (\phi_{yp} - \phi_y) \qquad (viii)$$

Equations (v), (vi) and (vii) give the mathematical relationship between the layer gradient at a given entry point x and the corresponding measured $\phi_x$ and $\phi_y$ angles. Thus, measuring a minimum of two diffraction orders enables the layer surface gradient to be estimated at that radial entry point x. But the surface shape is conveniently given by y = f(x), and so using

$$y = \int (dy/dx) \, dx$$

then

$$f(x) = \int (yd/xd) \, dx,$$

where yd/xd is given by Equation (vii) or (viii).

In this way, the deposition layer surface contour f (x), is simply obtained by numerical integration.

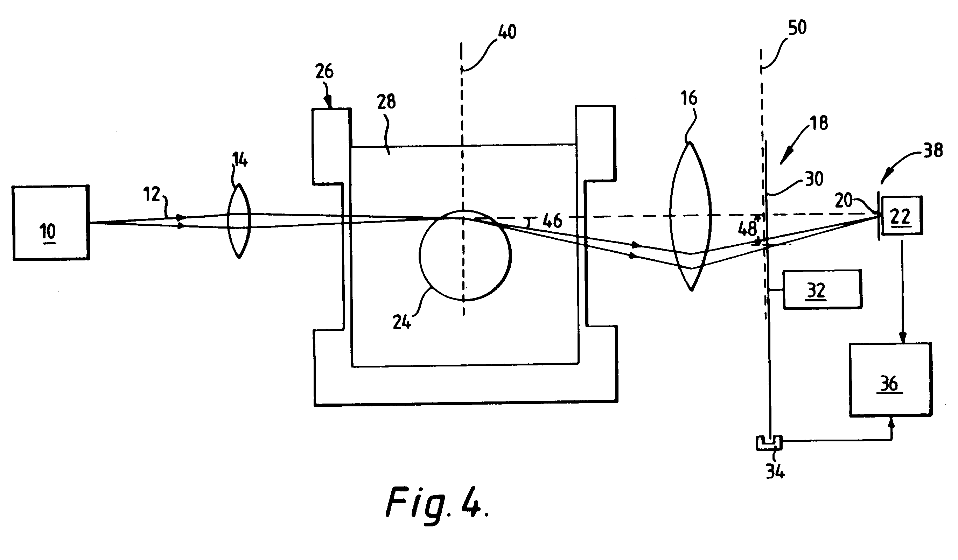

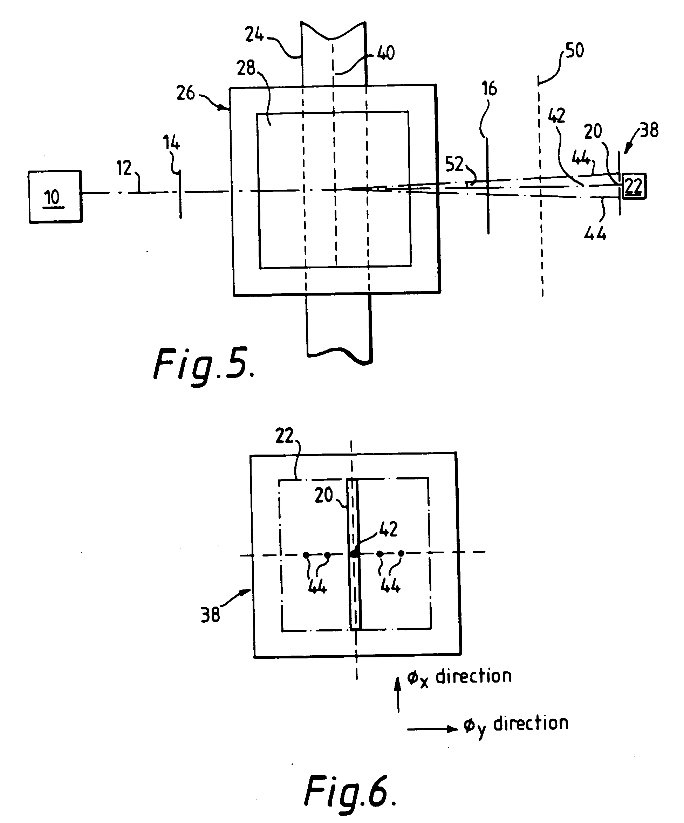

Referring to Figures 4 and 5, a first, relatively simple, form of preform analyser, which does not embody, but is useful for understanding, the present invention, will now be described. This analyser comprises a laser 10 which emits an illuminating beam 12, first and second cylindrical lenses 14, 16, a chopper 18, a slit aperture 20 and a solid state detector 22 for sensing the beam 12, all in the optical path of the beam 12. During measurement of an optical fibre preform 24, the preform 24 is placed in the optical path of the beam 12 between the first and second cylindrical leans 14, 16 contained in a bath 26 of index matching fluid 28.

The laser 10 is a Helium Neon laser emitting light at a wavelength of 633 nm, and is movable relative to the preform 24 but with the remainder of the optical system (including lenses 14 and 16, chopper 18, aperture 20 and detector 22) in a direction roughly perpendicular to the illuminating beam 12 so as to illuminate the entire thickness of preform 24.

The chopper 18 consists of a chopper blade 30, rotatable by a motor 32, in the form of a rotating disc with alternate opaque and transparent parts, as disclosed, for instance, in United Kingdom Patent No. GB-B-2071315. An optical interrupt detector 34 is located in a fixed position relative to the chopper blade 30, and transmits a reference signal to timing apparatus 36.

The first and second cylindrical lenses 14 and 16 are mounted with their longitudinal axes aligned with the longitudinal axis of the preform 24. The asymmetry of lens 16 is used to focus the beam 12 in the plane of the aperture 20 more in the $\phi_x$ direction than in the $\phi_y$ direction, so that the $\phi_x/\phi_y$ plane is effectively squashed down to the $\phi_y$ axis in the plane of the aperture 20 (which is the plane of the detector 22). in this way a smaller detector 22 may be used than is otherwise possible. It will be appreciated therefore that an aperture movable in the $\phi_x$ direction could not be located at the plane of the detector 22 but would have to be located at some other plane such as focal plane 50.

Referring now to Figure 6, the aperture 20 is formed in an opaque plate 38, which is movable by known amounts under motor control in its own plane. The plate 38 is movable in any direction, including perpendicular to the longitudinal axis of the aperture 20. Further, the aperture 20 is itself of variable width. This is achieved by separation of plate 38 into two halves, each of which can be moved together or apart under motor control.

Alternatively, instead of both the plate 38 being movable and the aperture 20 being separable, both movement and separation of the aperture could be effected by the two halves forming the aperture 20 being movable independently in a direction perpendicular to the longitudinal axis of the aperture 20 and in the plane of the plate 38, and the plate 38 being rotatable about an axis perpendicular to its plane.

The solid state detector 22 has a sensitive area which is large compared with the area of the beam 12 at the surface thereof, as shown in Figure 3. The detector 22 transmits information to the timing apparatus 36.

In operation, the beam 12 from the laser 10 is formed by means of the first cylindrical lens 14 on a centre plane 40 of the preform 24. Part of the beam 12 exiting the preform 24 is focused by the second cylindrical lens 16 through the aperture 20 onto the detector 22.

In the particular case exemplified in Figures 4 and 6, the preform 24 is a typical VAD preform, and as such has an axial variation in refractive index, and the zeroth order beam portion 42 and the higher order beam portion 44 are separated in the $\phi_y$, but not the $\phi_x$, direction. The longitudinal axis of the aperture 20 is orientated in the $\phi_x$ direction and is positioned so as to accept the zeroth order beam portion 42 but reject the higher orders 44. The $\phi_x$ deflection 46 of the zeroth order beam portion 42 is computed from the position 48 of the beam 12 in the focal plane 50 of the lens 16. The position 48 is measured by the timing apparatus 36 which determines the time difference of intersection of the chopper blade 30 with the beam 12 as determined by the detector 22 and a fixed reference signal from the interrupt detector 34. The chopper 18 thus effectively encodes the position 48 as a time difference. It will be appreciated that if only the zeroth order beam portion 42 is required to be measured, the aperture 20 could be fixed rather than movable.

The radial refractive index profile of the preform 24 is calculated from the $\phi_x$ deflection 46 of the zeroth order beam portion 42 by the theory described, for example, in Electronics Letters Vol. 16, No.6, pp.219-221, 1980. The theory is in fact quite generally applicable to most types of preform.

An angular separation 52 of the diffraction orders is determined from a knowledge of the linear distance between plane 40 and the plane of the aperture 20, and by measuring the linear movement of the aperture 20 from its position for acceptance of the zeroth order beam portion 42 to acceptance of the relevant higher order beam portion 44.

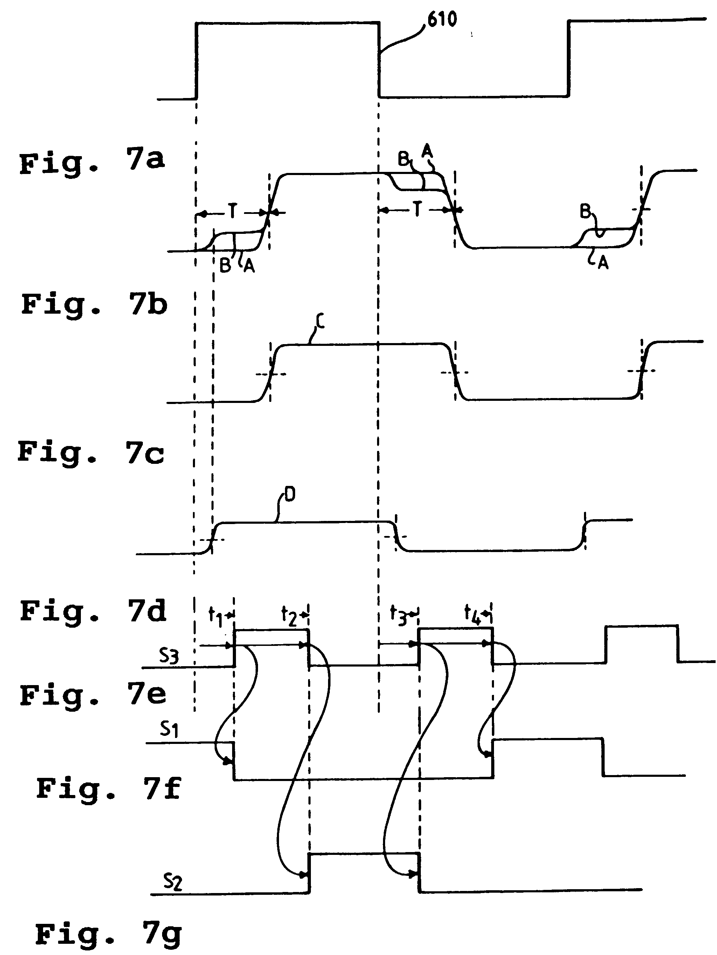

The first lens 14 is not of necessity cylindrical, although, if it is not, another cylindrical lens, fulfilling the same function as lens 216 in Figure 7, is required to collect light onto the detector 22. In this case, the computation of the angular separation of the orders relies on the parameters of the additional lens and it is likely that discrimination in the $\phi_y$ direction will be less than successful than if lens 14 is cylindrical. Apart from these advantages, the main value of lens 14 being cylindrical is that the beam is relatively broad (1mm typically) in the axial direction of the preform but narrow (typically 25μm) in the radial direction. The narrowness of a diffraction order is determined by the number of layers illuminated by the beam. Thus the asymmetric beam created by cylindrical lens 14 affords good optical resolution in the $\phi_x$ direction whilst generating well separated and narrow diffraction orders in the $\phi_y$ direction when the preform 24 contains an axially varying layer structure of refractive index. This assists in the discrimination of the orders by the aperture 20 and relaxes the constructional tolerances on the aperture 20.

The purpose of the second cylindrical lens 16 is to retain the measuring function in the $\phi_x$ direction but to spread the higher order beam portions 44 as widely as possible so that the distance between the focal plane 50 and the aperture 20, and the demands upon precision of movement of the aperture 20, are minimised.

According to an embodiment of the present invention an electronic aperture is provided, which effectively processes the beam after it has been detected by the detector. The electronic aperture essentially utilises the chopper 18, detector 22 and timing apparatus 36 of Figure 4, but with appropriately modified circuitry in the timing apparatus 36 of that apparatus.

In outline, the chopper 18 temporally encodes the beam 12, the detector 22 turns the temporally encoded beam 12 into a signal and the timing apparatus 36 is modified so as to shut off the signal for a certain period of time, this period of time representing the width of the aperture. The aperture may thus be thought of as being in the plane of the chopper.

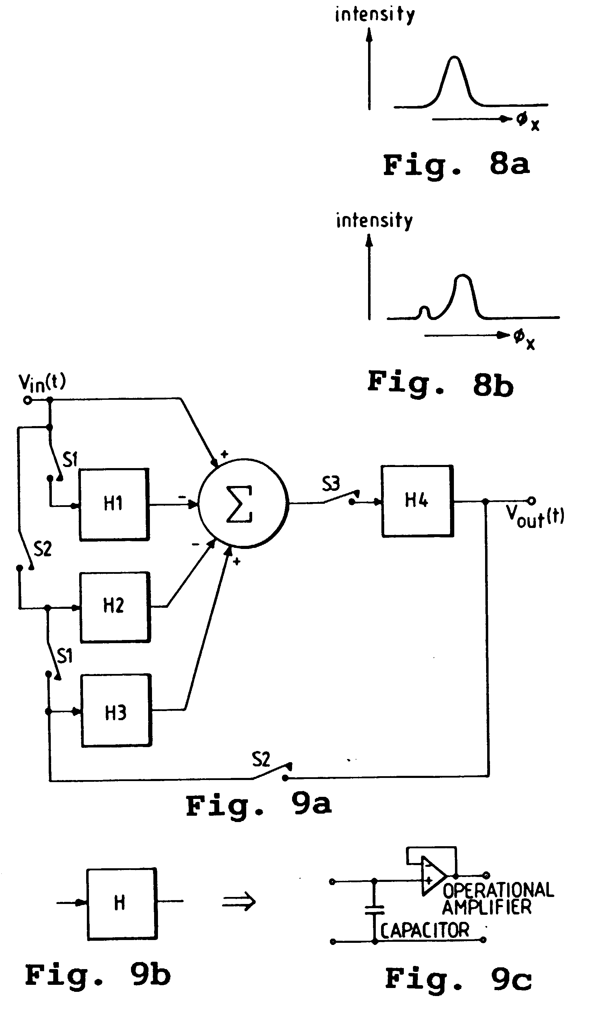

In more detail, referring to Figures 7, the reference signal 610 shown in Figure 7a is generated by the interrupt detector 34 of Figure 4. If the beam 12 incident on the chopper 18 is aligned on the $\phi_x$ axis 5 and has the form shown in Figure 8a, the chopper 18 temporally encodes this beam 12 so as to be turned by the detector 22 into the signal denoted by line A in Figure 7b. The time T is a measure of the angle of deviation of the beam 12 as described, for instance, in GB-A-2071315. However, when the beam 12 is split into distinct diffraction orders, as shown in Figure 8b, then the signal from the detector 22 takes the form of line B of Figure 7b, in which case time interval T no longer provides a relevant measurement of beam 5 deviation.

The electronic moving aperture operates by switching on and off the signal denoted by line B at times analogous to the edges of a spatial aperture. This may be achieved either by circuitry or by software. Time portions of the signal are thus selected in an analogous manner to the selection of portions of the optical beam in space by the moving mechanical aperture. For instance, different parts of the signal B of Figure 7b may be selected to give 5 either the signal C of Figure 7c or the signal D of Figure 7d. It is to be noted that the form of the signals C & D is such as to permit them to processed by precisely the same signal processing and computing means as is sued for the signal A in Figure 7b. 0 A circuit to implement this embodiment of aperture will now be described. Mathematically, the requirement on the aperture circuit to convert signal B of Figure 7b to signal D of Figure 7d is described by the following set of equations, where $V_{in}(t)$ is the signal 5 from the detector 22 and is the voltage input to the aperture circuit, and $V_{out}(t)$ is the output voltage of the aperture circuit.

Time period t1 to t2:

$$V_{out}(t) = V_{in}(t) - V_{in}(t1) \qquad (i)$$

Time period t2 to t3:

$$V_{out}(t) = V_{in}(t2) - V_{in}(t1) \qquad (ii)$$

Time period t3 to t4:

$$V_{out}(t) = V_{in}(t) - V_{in}(t3) + V_{in}(t2) - V_{in}(t1) \qquad (iii)$$

Time period t4 to t1:

$$V_{out}(t) = V_{in}(t4) - V_{in}(t3) + V_{in}(t2) - V_{in}(t1), \qquad (iv)$$

or

$$V_{out}(t) = 0$$

since

$$V_{in}(t1) - V_{in}(t2) = - (V_{in}(t3) - V_{in}(t4)).$$

t1 and t2 are the start and stop times of the aperture at the edge of the chopper blade 30 which is exposing the beam, and t3 and t4 are the equivalent at the complementary edge of the chopper blade 30 which is obscuring the beam.

Using well-known analogue computing techniques, these equations may be implemented as shown in Figure 9a. S1, S2 and S3 are switches which may be opened or closed, the summation symbol denotes the summation of the inputs taking into account the given signs, and the memory, or hold, block is typically implemented electrically as shown in Figure 9b.

The method of operation of the aperture circuit of Figure 9a is now explained with reference to Figures 7e to 7g, where the states of switches S1, S2 and S3 are shown, each switch being closed at the higher of the two values of its respective control signal. At time t1, S3 closes, S1 opens, and S2 remains closed, with the effect that the output of block H1 is $V_{in}(t1)$, and so Equation (i) is implemented up until time t2. At time t2, when S3 opens, S1 remains open, and S2 closes, the output of H1 remains $V_{in}(t1)$, the output of H3 takes value $V_{in}(t2)$, and the output of H2 takes value $V_{in}(t)$, and so Equation (ii) is implemented up until time t3. At time t3, when S3 re-opens, S1 remains open, and S2 closes, the output of H1 remains $V_{in}(t1)$, the output of H3 remains $V_{in}(t2)$, the output of H2 is $V_{in}(t3)$, and so Equation (iii) is implemented up until time t4. At time t4, when S3 re-opens, S1 closes and S2 remains open, and the output becomes zero as required by Equation (iv).

Time t1 and t3 are determined as specified times after the reference signal 610 and are implemented by a programmable digital counter. The values of t1 and t3 are selected by a computer programme which controls the electronic aperture. Thus the start edge of the aperture is determined with respect to the reference signal 610. The effective width of the aperture, that is, times t2-t1 and t4-t3, is determined by a second programmable counter. The precise value of the width is selected by the computer programme controlling the aperture. The control signals selecting the states of switches S2 and S3 are derived from S3 by standard digital logic circuits such as D-edge flip-flops and NAND gates.

It will be appreciated that, although this description has been given for the situation of two distinct beam portions which lead to signal B in Figure 7b, the circuit operates for any shaped waveforms with complementary falling and rising edges and so may be used to characterise the shape of any light beam intercepted by the chopper blade 30.

It will be understood that in order to achieve movement of the electronic aperture the times at which the signal is switched on and off will need to be varied, whilst a fixed electronic aperture could be achieved by simply maintaining those times constant. It will also be understood that, as described above, the electronic aperture is only movable in one direction, that direction being determined by the direction of movement of the chopper blade through the beam. For reasons explained elsewhere, it is normally preferred that this direction is the $\phi_x$ direction. Usually, encoding in the $\phi_x$ direction only is achieved by using radial edges to the chopper blade 30. However, non-radial, and non-straight edges may be used to encode in both the $\phi_x$ and $\phi_y$ directions as described by GB-A-2071315 at p. 7 line 7, for encoding means of the "mark-space" ratio. In this way, the electronic aperture may be used for discrimination in both the $\phi_x$ and $\phi_y$ directions.

## Claims

1. A transverse-type analyser, for measuring optical properties of an approximately cylindrical transparent object (24) such as an optical fibre or optical fibre preform, comprising illuminating means (10) for producing an illuminating beam (12), a detector (22) for sensing the illuminating beam (12) after transmission through said object (24), means (26) for holding said object (24) between the illuminating means (10) and the detector (22), and temporal modulation means (18) located between the object (24) and the detector (22) for encoding the beam in the plane of the modulation means (18) with its own positional information for detection by the detector (22); characterised by electronic means (36) for switching output signals from the detector (22), so as to allow only selected time portions of those signals to pass, thereby discriminating a selected portion of the beam incident on the detector (22).

2. An analyser as claimed in claim 1, wherein said electronic means (36) are adjustable such that the detector (22) produces a signal which is representative of only a selected portion of the transmitted beam which is refracted in a direction $\phi_y$, which is parallel to the longitudinal axis of the said object (24).

3. An analyser as claimed in claim 2, wherein the electronic means (36) are adjustable so as to operate on signals representing beam deviations only substantially in the $\phi_y$ direction.

4. An analyser as claimed in any preceding claim, wherein said electronic means (36) are adjustable whereby to discriminate a plurality of distinct portions of the beam exiting from the object.

5. An analyser as claimed in claim 4, further comprising processing means connected to the output of the detector (22) for processing the output information regarding said plurality of distinct portions.

6. An analyser as claimed in any preceding claim, further comprising focusing means (16), preferably an asymmetric lens and more preferably a cylindrical lens, for receiving the illuminating beam (12) located between the object (24) and the detector (22) and arranged so as to focus the beam asymmetrically in a plane where the electronic means (36) acts to discriminate said selected portion of the beam.

7. An analyser as claimed in claim 6, wherein the focusing means (16) focuses the beam less sharply in a direction, $\phi_y$, parallel to the longitudinal axis of the object (24) than in a direction, $\phi_x$, perpendicular to a plane containing said axis and said illuminating beam (12).

8. An analyser as claimed in claim 6 or 7, wherein the focusing means (16) is a cylindrical lens having its longitudinal axis oriented substantially in the $\phi_y$ direction.

9. An analyser as claimed in any one of claims 6 to 8, further comprising a second focusing means (14) located between the illuminating means (10) and the object (24) and arranged so as to focus the beam asymmetrically at the object (24).

10. An analyser as claimed in any preceding claim, wherein in use the object (24) diffracts the beam (10) and wherein the electronic means (36) is adjustable from a state in which a beam portion corresponding to one diffraction order can be discriminated, to at least one other state in which a beam portion corresponding to a different diffraction order can be discriminated.

11. An analyser as claimed in any preceding claim, wherein the electronic means (36) just accepts the whole beam when there is no diffraction, and only a portion of the beam when diffraction occurs.

12. An analyser as claimed in any preceding claim, wherein the electronic means (36) is adjustable so as to selectively discriminate beam portions of variable size.

13. An analyser as claimed in any preceding claim, wherein the detector (22) is capable of measuring intensity.

**14.** An analyser as claimed in any one of claims 1 to 5, further comprising means for separating portions of the beam at a plane where the electronic means (36) acts to discriminate said portions.

**15.** An analyser as claimed in claim 10, further comprising interpolation and extrapolation means for calculating positional information relating to the beam portion corresponding to one diffraction order from positional information relating to the beam portions according to other diffraction orders.

**16.** An analyser as claimed in any preceding claim, further comprising measuring means coupled to the electronic means (36) for measuring the position of a selectively discriminated beam portion.

**Patentansprüche**

**1.** Queranalysator, geeignet zum Messen der optischen Eigenschaften eines näherungsweise zylindrischen, durchsichtigen Objekts (24), beispielsweise einer optischen Faser oder der Vorform einer optischen Faser, umfassend

eine Beleuchtungseinrichtung (10), geeignet zum Erzeugen eines Beleuchtungsstrahls (12), einen Fühler (22), geeignet zum Erfassen des Beleuchtungsstrahls (12) nach dem Durchgang durch das Objekt (24), eine Einrichtung (26), geeignet zum Halten des Objekts (24) zwischen der Beleuchtungseinrichtung (10) und dem Fühler (22), und eine zeitliche Moduliereinrichtung (18), die zwischen dem Objekt (24) und dem Fühler (22) angeordnet ist, geeignet zum Codieren des Strahls in der Ebene der Moduliereinrichtung (18) mit seiner eigenen Lageinformation, damit sie der Fühler (22) erfassen kann, gekennzeichnet durch elektronische Einrichtungen (36), geeignet zum Schalten der Ausgangssignale aus dem Fühler (22), so daß nur ausgewählten Zeitabschnitten dieser Signale der Durchgang erlaubt wird, wobei ein ausgewählter Abschnitt des Strahls unterschieden wird, der auf den Fühler (22) fällt.

**2.** Analysator nach Anspruch 1, wobei die elektronischen Einrichtungen (36) einstellbar sind, so daß der Fühler (22) ein Signal erzeugt, das nur einen ausgewählten Abschnitt des übertragenen Strahls darstellt, das in einer Richtung $\phi_y$ gebrochen wird, die parallel zur Längsachse des Objekts (24) ist.

**3.** Analysator nach Anspruch 2, wobei die elektronischen Einrichtungen (36) einstellbar sind, so daß sie Signale verarbeiten, die nur die Strahlabweichungen im wesentlichen in der Richtung $\phi_y$ darstellen.

**4.** Analysator nach irgendeinem vorhergehenden Anspruch, wobei die elektronischen Einrichtungen (36) einstellbar sind, um damit eine Anzahl verschiedener Abschnitte des Strahls zu unterscheiden, die aus dem Objekt austreten.

**5.** Analysator nach Anspruch 4, zudem umfassend Verarbeitungseinrichtungen, die mit dem Ausgang des Fühlers (22) verbunden sind, geeignet zum Verarbeiten der Ausgabeinformation hinsichtlich der Anzahl verschiedener Abschnitte.

**6.** Analysator nach irgendeinem vorhergehenden Anspruch, ferner umfassend eine Fokussiereinrichtung (16), bevorzugt eine asymmetrische Linse und besonders bevorzugt eine Zylinderlinse, geeignet zum Empfangen des Beleuchtungsstrahls (12), die zwischen dem Objekt (24) und dem Fühler (22) angeordnet und so eingerichtet ist, daß sie den Strahl asymmetrisch in einer Ebene bündelt, in der die elektronische Einrichtung (36) arbeitet, um die ausgewählten Strahlabschnitte zu unterscheiden.

**7.** Analysator nach Anspruch 6, wobei die Fokussiereinrichtung (16) den Strahl in einer Richtung, $\phi_y$, die parallel zur Längsachse des Objekts (24) ist, weniger scharf bündelt als in einer Richtung, $\phi_y$, die senkrecht zur Ebene ist, die die Achse und den Beleuchtungsstrahl (12) enthält.

**8.** Analysator nach Anspruch 6 oder 7, wobei die Fokussiereinrichtung (16) eine zylindrische Linse ist, deren Längsachse im wesentlichen an der Richtung $\phi_y$ ausgerichtet ist.

**9.** Analysator nach irgendeinem der Ansprüche 6 bis 8, auch umfassend eine zweite Fokussiereinrichtung (14), die zwischen der Beleuchtungseinrichtung (10) und dem Objekt (24) angeordnet und so eingerichtet ist, daß sie den Strahl asymmetrisch auf das Objekt (24) bündelt.

**10.** Analysator nach irgendeinem vorhergehenden Anspruch, wobei das Objekt (24) bei Gebrauch den Strahl (10) bricht, und wobei die elektronische Einrichtung (36) aus einem Zustand umstellbar ist, in dem ein Strahlabschnitt auswählbar ist, der einer Beugungsklasse entspricht, in mindestens einen weiteren Zustand, in dem ein Strahlabschnitt auswählbar ist, der einer anderen Beugungsklasse entspricht.

**11.** Analysator nach irgendeinem vorhergehenden Anspruch, wobei die elektronische Einrichtung (36) den gesamten Strahl nur dann annimmt, wenn keine Brechung stattfindet, und nur einen Abschnitt des Strahls, wenn eine Brechung auftritt.

12. Analysator nach irgendeinem vorhergehenden Anspruch, wobei die elektronische Einrichtung (36) einstellbar ist, so daß sie wahlweise Strahlabschnitte veränderlicher Größe unterscheiden kann.

13. Analysator nach irgendeinem vorhergehenden Anspruch, wobei der Fühler (22) die Intensität messen kann.

14. Analysator nach irgendeinem der Ansprüche 1 bis 5, weiterhin umfassend Einrichtungen, geeignet zum Abtrennen von Abschnitten des Strahls in einer Ebene, in der die elektronische Einrichtung (36) arbeitet, um die Abschnitte zu unterscheiden.

15. Analysator nach Anspruch 10, ferner umfassend Interpolier- und Extrapoliereinrichtungen, geeignet zum Berechnen von Lage information bezüglich des Strahlabschnitts, die einer Beugungsklasse entspricht, aus Lageinformation bezüglich der Strahlabschnitte, die zu anderen Beugungsklassen gehört.

16. Analysator nach irgendeinem vorhergehenden Anspruch, zudem umfassend mit der elektronischen Einrichtung (36) gekoppelte Meßeinrichtungen, geeignet zum Messen der Lage eines ausgewählt unterschiedenen Strahlabschnitts.

**Revendications**

1. Analyseur de type transversal pour la mesure des propriétés optiques d'un objet transparent (24) approximativement cylindrique, tel qu'une fibre optique ou une préforme de fibre optique, comprenant un moyen d'éclairage (10) pour produire un faisceau lumineux (12), un détecteur (22) pour détecter le faisceau lumineux (12) après transmission à travers ledit objet (24), un moyen (26) pour maintenir ledit objet (24) entre le moyen d'éclairage (10) et le détecteur (22) et un moyen de modulation temporelle (18) situé entre l'objet (24) et le détecteur (22) pour coder le faisceau dans le plan du moyen de modulation (18) avec sa propre information de position pour détection par le détecteur (22) ; caractérisé en ce qu'il comprend un moyen électronique (36) permettant de commuter les signaux de sortie du détecteur (22) de façon à n'autoriser le passage de ces signaux que pendant certains intervalles de temps, en discriminant ainsi une partie spécifique du faisceau incident arrivant sur le détecteur (22).

2. Analyseur selon la revendication 1, dans lequel lesdits moyens électroniques (36) sont ajustables de telle sorte que le détecteur (22) génère un signal représentatif d'une seule partie sélectionnée du faisceau transmis qui est réfractée dans une direction $\phi_y$, qui est parallèle à l'axe longitudinal dudit objet (24).

3. Analyseur selon la revendication 2, dans lequel les moyens électroniques (36) sont ajustables de façon à agir sur des signaux représentant les déviations du faisceau, essentiellement uniquement dans la direction $\phi_y$.

4. Analyseur selon l'une quelconque des revendications précédentes, dans lequel lesdits moyens électroniques (36) sont ajustables de façon à discriminer plusieurs parties distinctes du faisceau sortant de l'objet.

5. Analyseur selon la revendication 4, comprenant en outre un moyen de traitement relié à la sortie du détecteur (22) pour traiter les informations de sortie concernant l'ensemble desdites parties distinctes.

6. Analyseur selon l'une quelconque des revendications précédentes, comprenant en outre un moyen de focalisation (16), de préférence, une lentille asymétrique, et de préférence encore une lentille cylindrique, pour recevoir le faisceau lumineux (12), placé entre l'objet (24) et le détecteur (22), et disposé de façon à focaliser le faisceau de façon asymétrique dans le plan où les moyens électroniques (36) agissent pour discriminer ladite partie sélectionnée du faisceau.

7. Analyseur selon la revendication 6, dans lequel le moyen de focalisation (16) focalise le faisceau moins fortement dans une direction $\phi_y$ parallèle à l'axe longitudinal de l'objet (24) que dans une direction $\phi_x$ perpendiculaire au plan contenant ledit axe et ledit faisceau lumineux (12).

8. Analyseur selon l'une ou l'autre des revendications 6 ou 7, dans lequel le moyen de focalisation (16) est une lentille cylindrique dont l'axe longitudinal est orienté essentiellement dans la direction $\phi_y$.

9. Analyseur selon l'une quelconque des revendications 6 à 8, comprenant en outre un second moyen de focalisation (14) placé entre le moyen d'éclairage (10) et l'objet (24) et disposé de façon à focaliser le faisceau de façon asymétrique sur l'objet (24).

10. Analyseur selon l'une quelconque des revendications précédentes, dans lequel, en fonctionnement, l'objet (24) diffracte le faisceau (12) et dans lequel les moyens électroniques (36) sont ajustables entre un état dans lequel une partie du faisceau correspondant à un ordre de diffraction peut être discriminée et au moins un autre état dans lequel peut s'effectuer la discrimination d'une partie du faisceau ayant un ordre de diffraction différent.

**11.** Analyseur selon l'une quelconque des revendications précédentes, dans lequel le moyen électronique (36) accepte uniquement l'ensemble du faisceau en l'absence de diffraction et une partie seulement du faisceau en cas de diffraction.

**12.** Analyseur selon l'une quelconque des revendications précédentes, dans lequel le moyen électronique (36) est ajustable de façon à discriminer de façon sélective des parties de faisceau de taille variable.

**13.** Analyseur selon l'une quelconque des revendications précédentes, dans lequel le détecteur (22) peut mesurer une intensité.

**14.** Analyseur selon l'une quelconque des revendications 1 à 5, comprenant en outre un moyen pour séparer des parties du faisceau dans un plan où ledit moyen électronique (36) agit pour discriminer lesdites parties.

**15.** Analyseur selon la revendication 10, comprenant en outre un moyen d'interpolation et d'extrapolation pour calculer les données de position relatives à la partie de faisceau correspondant à un ordre de diffraction, à partir des données de position relatives aux parties de faisceau correspondant à d'autres ordres de diffraction.

**16.** Analyseur selon l'une quelconque des revendications précédentes, comprenant en outre des moyens de mesure couplés au moyen électronique (36) pour mesurer la position d'une partie de faisceau discriminée de façon sélective.

Fig.1a.

Fig.1b.

Fig.1c.

Fig.2a.

Fig.2b

Fig.2c.

Fig.2d.

Fig.2e.

# Fig. 3.

PREFORM

STRUCTURE
(SIDE VIEW–CROSS SECTION)

t

$\emptyset$x

$\emptyset$y

s

DIFFRACTION PATTERN

Fig. 4.

EP 0 560 755 B1

Fig.5.

ϕx direction

ϕy direction

Fig.6.

Fig. 7a

Fig. 7b

Fig. 7c

Fig. 7d

Fig. 7e

Fig. 7f

Fig. 7g

**Fig. 8a**

**Fig. 8b**

**Fig. 9a**

**Fig. 9b**

**Fig. 9c**